# EUROPEAN PATENT SPECIFICATION

(11) **EP 3 827 967 B1**
(45) Date of publication and mention of the grant of the patent: **12.06.2024**
(21) Application number: 19383050.2
(22) Date of filing: 26.11.2019
(51) Int. Cl.: B29C 64/118, B33Y 10/00, B33Y 70/00, B33Y 80/00, B29C 70/16, B29C 70/44, B29B 11/00, B29C 70/48, B29C 70/38

(54) **METHOD FOR ADDITIVE MANUFACTURING OF A PREFORM**
VERFAHREN ZUR GENERATIVEN FERTIGUNG EINER VORFORM
PROCÉDÉ DE FABRICATION ADDITIVE D'UNE PRÉFORME

(43) Date of publication of application: 02.06.2021
(73) Proprietor: Fundación Tecnalia Research & Innovation, 20009 Donostia - San Sebastián (ES)
(72) Inventor: Palenzuela Gutiérrez, Luis, E-20009 San Sebastián (Gipuzkoa) (ES); García Palomares, Maitane, E-20009 San Sebastián (Gipuzkoa) (ES); Mendizábal Larrañaga, Mª Asunción, E-20009 San Sebastián (Gipuzkoa) (ES); Ollo Escudero, Olatz, E-20009 San Sebastián (Gipuzkoa) (ES)
(74) Representative: Balder IP Law, S.L.

(56) References cited:
- EP-A1- 3 178 637
- FR-A1- 3 062 336
- US-A1- 2017 151 721
- US-A1- 2019 039 297

## Description

### TECHNICAL FIELD

The present disclosure relates to the technical field of additive manufacturing for fabricating continuous fiber preforms to obtain reinforced composites parts

### BACKGROUND ART

Traditionally, manufacturing processes of composites reinforced with dry continuous fiber (matt, woven or unidirectional) are based on designing the composite (materials, thicknesses, orientations), selecting and providing the different structures of the reinforcement, cutting fabrics to size, stacking them and compacting the stack to obtain a preform. One particularity of the conventional processes is that the geometry of the preform that can be obtained, by cutting fabrics to size, stacking them and compacting the stack, is limited to 2D pieces, or 2D ½ pieces, the latter meaning that the height of the 2D ½ piece in certain zone/s of the plane can be different from other zones.

A resin is subsequently applied to the preform to obtain the desired reinforced composite part. Although said processes are being automated with the use of robots, it is often necessary to carry out subsequent machining operations for the emptying or generation of windows in a part, increasing thus the production costs and cycle times of the manufacturing process.

US2005/0067731A1 discloses a process for manufacturing a preform for producing a part made of a composite material. A reinforcing thread is deposited in successive layers on a support surface. A binder is provided in association with the reinforcing thread so as to adhere the reinforcing thread to the support surface and the successive layers of thread. The reinforcing thread is pressed against the support surface in a manner that exerts a pressure substantially perpendicular to the support surface at the point where the thread is deposited. The binder may be pre-applied to the support surface or it can be applied simultaneously with the reinforcing thread. This process requires on one hand pressure necessary for the compaction, and on the other hand does not allow to obtain complex geometries or 3D preforms.

US2019/039297A1 discloses a system having a polymer die comprising a fiber input, a heated polymer input, and a poly-fiber output. The polymer die is operable to receive a fiber strand from the fiber input, coat the fiber strand with a polymer from the heated polymer input, and extrude a poly-fiber strand from the poly-fiber output.

Additive manufacturing is a process where machines automatically fabricate shaped parts, pixel-by-pixel, layer-by-layer, from almost any material, as opposed to traditional subtractive manufacturing techniques. Thus, additive manufacturing technology has simplified most of the pre-processes and post-processes aforementioned, overcoming their disadvantages, reducing technical limitations and increasing the competitiveness of the composite manufacturing (Luca D. (2017) J. Material Sci. Eng. 6:4).

Currently, all additive manufacturing technologies are oriented to the manufacturing of final reinforced composite parts made of a thermoplastic or thermoset material reinforced with either short fibers or continuous fibers.

Matzuaki R, Ueda M, Namiki M, Jeong TK, Asahara H, Horiguchi K, Nakamura T, Todoroki A and Hirano Y (Scientific reports (2016) 6:23058) report an additive manufacturing process for three-dimensional (3D) printing of continuous fiber-reinforced thermoplastics parts based on Fused-Deposition Modeling (FDM). Said process enables direct 3D fabrication of reinforced composites parts without the use of molds and comprises separately supplying a thermoplastic filament and continuous reinforcing fibers to a 3D printer. The continuous fibers are impregnated by the thermoplastic in the heated nozzle of the printer. The thermoplastic used is polylactic acid (PLA) while carbon or glass fibers are used as the reinforcing fibers.

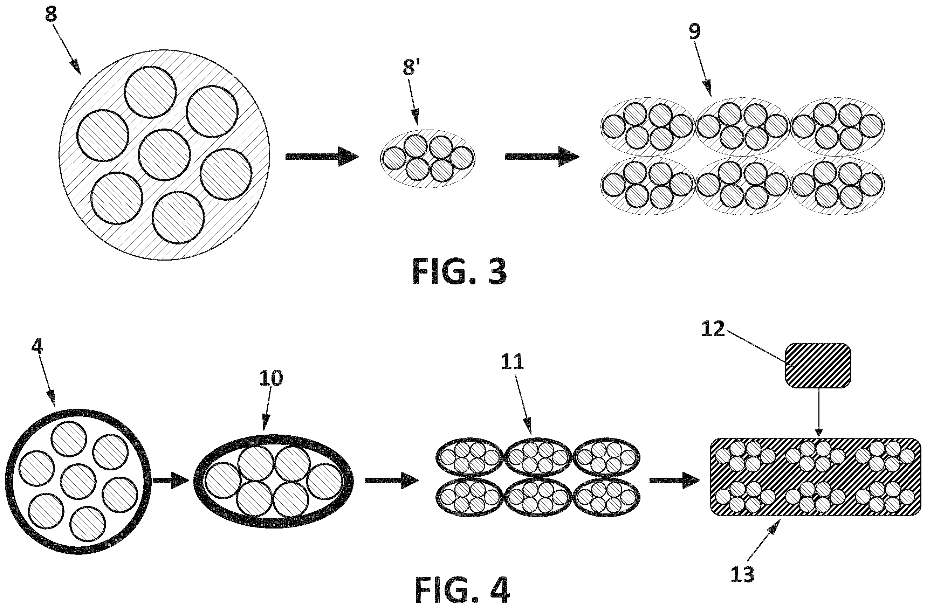

Dickson AN, Barry JN, McDonell KA and Dowling DP (Additive Manufacturing 16 (2017) 146-152) evaluate the performance of continuous carbon, Kevlar^{™} and glass fiber reinforced composites manufactured using the FDM additive manufacturing technique. The nylon fiber reinforced composites are fabricated using a Markforged Mark One 3D printing system. In said system, the reinforcing fibers are impregnated by a thermoplastic nylon in the extruder of the 3D printing system. A schematic representation of the Markforged process is shown in Figure 3.

Porosity is however a major concern for fiber-reinforced final composite parts manufactured by additive technologies such as FDM. Although some progress has been made to keep porosity at a minimum, (see, for example, Wang J, Xie H, Weng Z, Senthil T and Wu L (2016) Mater Des 105, 152-159 and Ning F, Cong W, Hu Z and Huang K (2017) J Compos Mater 51 (27), 3733-3742), the composite parts obtained by additive manufacturing are still too porous and show thus poorer mechanical properties than those composite parts obtained by traditional methods.

In order to overcome one or more of the abovementioned disadvantages, the present invention provides an alternative method to obtain fiber-reinforced final composite parts with improved properties. The present method is based on the additive manufacturing of a continuous fiber preform by Fused Deposition Modeling (FDM) for subsequently fabricating a final reinforced composite part by a liquid molding process, in particular by a resin transfer molding (RTM) process or by infusion. Advantageously, this continuous fiber preform, hereinafter referred to also as preform, can be designed depending on the properties and characteristics desired for the final part to be obtained therefrom. With the new technology described in this invention, the preforms are manufactured by an additive manufacturing process of continuous filament deposition without the need for stitching.

### BRIEF DESCRIPTION OF THE DRAWINGS

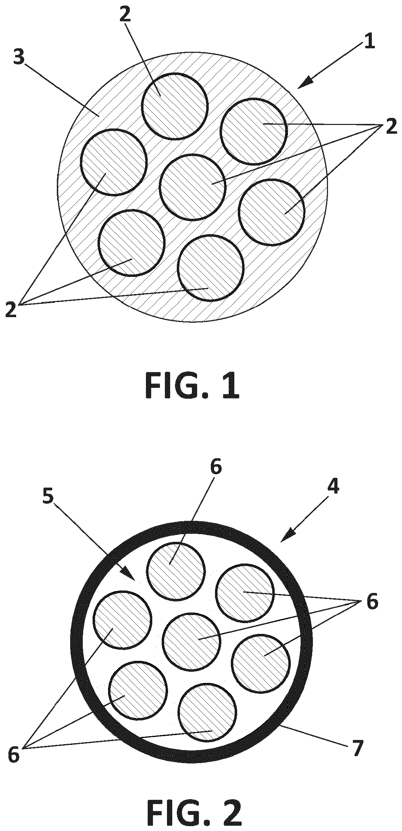

Fig. 1: shows a cross section of a filament used in the state of the art. The filament (1) comprises a bundle of fibers (2) impregnated by a thermoplastic material (3).
Fig. 2: shows a cross section of a continuous filament according to the present invention before being extruded. The filament (4) comprises: (i) one inner core (5) comprising of a bundle of fibers (6), and (ii) an outer binder coating (7) wrapping around the inner core, but not impregnating the bundle of fibers in opposition to the filament (1) shown in Figure 1.
Fig. 3: is a scheme of a manufacturing process according to the state of the art (Markforged process) where a preformed filament (8) is deposited and (8') is the deposited filament, in successive layers rendering the reinforced composite final part (9).
Fig. 4: is a scheme of a manufacturing process according to the invention where the continuous filament (4) is deposited (deposited filament (10)); successive layers are deposited forming the preform (11) and after the impregnation with an impregnation resin (12) a reinforced composite final part (13) is obtained. The impregnation step completes the preform with the impregnation resin eliminating the initial porosity.

### DETAILED DESCRIPTION OF THE INVENTION

In an aspect the invention relates to a method for additive manufacturing by Fused-Deposition Modeling (FDM) of a preform the method comprising:
a) supplying a continuous filament that comprises:
   (i) one inner core comprising a bundle of fibers, and
   (ii) an outer binder coating, which completely wraps said inner core;
b) feeding the continuous filament to an extruder at a feed rate, the extruder heating the continuous filament to a temperature which is between the softening temperature of the binder and the melting temperature of the binder, and below the melting temperature of the fibers; and
c) 3D deposition of the continuous filament on a base surface in at least one or more successive layers to obtain the preform.

The method of the present invention makes possible to manufacture, 3D continuous fiber preforms with a level of detail, freedom and geometric complexity impossible, to the best of the inventor's knowledge, to obtain with the currently existing preforming technologies. The method of the invention further allows the manufacturing of reinforced composite final parts starting from these preforms, as it will be explained below, with a high level of topological optimization and functional integration.

Usually, molding composites processes use preformed multi-sheet fabrics (dry preforms) with different architectures constructed from yarns or tows arranged into complex dimensional structures. These can be created from weaving, braiding or non-woven processes. A resin is applied to the preform to create the composite material. With the method of the present invention the continuous fiber preforms of the invention, also hereinafter referred to as preforms, are manufactured by an additive manufacturing process of continuous fiber deposition without the need for stitching.

### Continuous filament

The continuous filament for use in the present invention comprises:
(i) one inner core comprising of a bundle of fibers and
(ii) an outer binder coating, which completely wraps said inner core.

An exemplary continuous filament (4) according to the invention is represented in Figure 2 wherein the inner core (5) consist of a bundle of seven fibers (6), and said inner core (5) is wrapped, that is, fully enveloped, by a continuous and uniform outer binder coating (7).

Compared to a filament according to the state of the art, represented in Figure 1, wherein the filament (1) of the state of the art comprises a bundle of fibers (2) and a binder (3), that completely impregnates all the fibers of the bundle, in the continuous filament of the invention the binder coating only wraps the bundle of fibers, but does not impregnate the fibers. The filament represented in Figure 1 is used in the state of the art as additive material to manufacture a reinforced composite final part (not a preform) and pores appear between the successive filament layers reducing the mechanical properties of the part.

The particular structure of the continuous filament used in the present invention is important for obtaining the outstanding characteristics of the reinforced composite final part obtained using this preform.

The bundle of fibers for use in the invention may comprise one or more fibers. Usually the bundle comprises several fibers which may range within a wide range. In some exemplary embodiments the bundle of fibers comprises 5 to 10,000,000 fibers; in others from 10 to 1,000,000 or from 100 to 100,000. The term bundle is to be understood in the broad sense; that is, including for example strands, and braided threads.

The fibers of the bundle may be made from one or more of any of the conventional reinforcing material, and are also referred to in the state of the art as reinforcing fibers, which are well known for the skilled person. Non-limiting examples of fibers are natural fibers, such as wool, cotton, flax, etc., synthetic fibers, such as aramide, polyester, polyamide, poly-paraphenylene terephthalamide (Kevlar^{™}), carbon fibers, glass fibers, boron fibers, ceramic fibers, among others, as well as mixtures thereof. In particular embodiments the fibers are carbon fibers.

The bundle of fibers can also comprise a metal wire, like copper, which can be e.g. interleaved to provide specific properties to the continuous filament and the preform obtained therefrom, such as resistive heating capability.

The fibers used in embodiments of the present invention are continuous fibers provided in form of a roving. Rovings are continuous fibers suitable for use in FDM process. Suitable fibers for use in the invention can have different Tex values and densities, which are not particularly limited. In some exemplary embodiments of the invention carbon fibers are used. Suitable carbon fibers provided e.g. as rovings present typically 1000 to 4000 tex and 10 to 30K.

The binder in the present disclosure comprises a thermoplastic polymer. The term binder is used to refer to the thermoplastic polymer composition that forms the coating binder of the filament, since on one hand it serves to hold together the fibers of the bundle during the manufacturing of the preform. In addition, the binder also makes possible the printing of the filaments. In principle any conventional thermoplastic polymer used in the present technical field can be used for obtaining the binder, more particularly any thermoplastic polymer can be used that is compatible with the fibers of the bundle, and with the impregnation thermoplastic or thermoset resin used for manufacturing the reinforced composite final part as explained further below.

The term compatible as used in the present invention means that the thermoplastic polymer of the binder or the binder that wraps the bundle of fibers must dissolve in the impregnation resin and be mixable with the impregnation thermoplastic or thermoset resin; shall not interfere the binding of the impregnation thermoplastic or thermoset resin with the fibers, allowing the correct and complete filing of the part, avoiding thus the generation of pores in the reinforced composite final part.

The choice of the thermoplastic polymer for the binder can be determined by the skilled person, in each case, depending on the chemical properties of the thermoplastic or thermostable resin selected that will impregnate the preform, the chemical nature of the fibers to be used. Thus, each thermoplastic or thermoset resin or family of resins require a specific type of binder and fibers which can be easily determined by the skilled person. Non-limiting examples of thermoplastic polymers suitable for use as binders are styrenic block copolymers, polyurethanes, copolyesters and mixtures thereof.

In some preferred embodiments styrenic block copolymers are used for the binder, more preferably styrene-diene-styrene copolymers, such as styrene-butadiene-styrene copolymers. In still preferred embodiments the styrene-butadiene-styrene copolymers have between 30 and 65% molecular weight styrene, in particular 35 to 55% molecular weight styrene with respect to that total molecular weight of the copolymer. In some embodiments the thermoplastic polymer is chemically functionalized by means for example of silanization agents, diglycyl methacrylate and/or maleic anhydride to modify its chemical properties and achieve the above-mentioned solubility of the binder in the impregnation resin.

The continuous filament is obtained by concentric extrusion of the thermoplastic polymer onto the one inner core comprising the continuous reinforcing bundle of fibers. For this purpose, a wire-coating nozzle is used, the inner elements of which will allow the total diameter of the filament and the thickness of the wrapping layer coating to be defined. Depending on the type of preform to be manufactured and the performance required of the reinforced composite final part to be obtained, the diameter of the continuous filament and the thickness of the binder coating may be varied within broad ranges. Further the filament section can be for example circular, rectangular (of the tape type) or ellipsoidal.

The continuous filament may have a diameter that is typically comprised between 0.5 and 20 mm, for example between 1.5 and 10 mm, or between 2 and 5 mm.

The thickness of the binder coating is typically comprised between 0.05 to 6 mm, or between 0.1 and 2 mm. Also the thickness is between 0.1% and 20%, for example between 0.5% and 10%, or between 1% and 5% of the transversal section of the filament. When the filament has a rectangular section, the process for its preparation will be the same as above disclosed, varying only the dimensions of the elements of the covering head. In the case of rectangular section filaments (tape type) the external dimensions may vary, typically, between 0.5 mm x 5 mm and 7 mm x 15 mm or 1 mm x 3 mm and 5 mm x 12 mm and the thickness of the coating may vary between 0.05 mm - 5 mm or between 0.1 mm - 3 mm. To check the outer dimensions of the filament, a calibration row positioned after the coating head can be used.

Also, in general, the binder coating is in a proportion of from 5 to 20 wt.% with respect to the total weight of the filament, in particular from 7 wt% to 15 wt%, for example 10 wt%.

As above disclosed the binder coating totally covers the one inner core, but does not impregnate the bundle of fibers, as shown in Figure 2. Accordingly, the fibers remain dry for maximum and optimal contact during the impregnation step with the impregnation thermoplastic or thermoset resin. The properties of the fibers (the type of material) and its structure (characteristics of the roving: K and Tex) are to be selected depending on the mechanical properties required for the reinforced composite final part. The chemical nature and thickness of the binder can also be selected depending on the properties required of the composite final part and the type of impregnation thermoplastic or thermoset resin to be used in the subsequent impregnation step carried out by liquid molding processes, in particular, by resin transfer molding (RTM) processes or by infusion.

In some exemplary embodiments the binder comprises one or more of the following characteristics:
- tensile strength from 10 to 110 MPa, or for example between 20 and 80 MPa as measured by ASTM D638-03;
- flexural elastic modulus from 0.10 to 4 GPa or for example between 0.5 and 2 GPa as measured by ASTM D790-03;
- softening temperature between 75 and 395 °C or for example between 100 and 250 °C;
- flow index from 1 to 30 g/10m or for example between 5 and 20 g/10m as measured by ASTM 1238.

In step b) of the method for additive manufacturing of a preform the continuous filament is feed to an extruder at a feed rate, the extruder heating the filament to a temperature which is between the softening temperature of the binder and the melting temperature of the binder, and below the melting temperature of the fibers. In some particular embodiments the filament is heated at a temperature of between 75 and 395 °C, or between 100 and 350 °C, or between 150 and 300 °C, like 200 °C or 250 °C.

In step c) the continuous filament is 3D deposited on a base surface in at least one or more successive layers to obtain the continuous fiber preform, which constitutes a further aspect of the present invention. No pressure is thereby applied.

In some particular embodiments for the printing of the preform the continuous filament is feed to an additive equipment type FDM (Fused Deposition Modeling) specific for this type of filament processing, provided with a cutting system in the extruder head by means of a knife or by means of ultrasounds. This additive equipment type FDM is well known in the art and may have 3 to 5 axes, for example 4 axes.

The additive equipment can also be provided with a further extruder head for the provision of a support material. In some particular embodiments the geometry of the preform to be obtain may require the provision of said support material which can be obtained by additive manufacturing too. The support is typically obtained from a different material than said used for of the preform itself. Typical materials for the said support are among others polyvinyl alcohol, polyalanine (PAL), acrylonitrile butadiene styrene (ABS) or other thermoplastic polymers This additional printing head requires two degrees of freedom (tilting base with two axes or a printing head with two additional degrees of freedom).

As previously mentioned, contrary to other techniques of the state of the art, like in the method disclosed in US2005/0067731A1, the deposition according to the present additive manufacturing method of the continuous filament does not require the exercising of any pressure on the forming preform. As a consequence, the present method allows for the manufacturing of 3D preforms with complex geometries without any limitations.

In addition, the integration of the preform design and the control of the additive manufacturing process in a same software simplifies and reduces the time to market.

In a further aspect the invention relates to a preform obtainable by the method for additive manufacturing above disclosed.

The preform can have any chemical composition derived from any combination of the above disclosed fibers and thermoplastic polymers. Furthermore, the preform can be 2D, 2D1/2 or 3D and have any geometry and size.

In some preferred embodiments the preform comprises a bundle of fibers selected from natural fibers, synthetic fibers, such as aramide, polyester, polyamide, poly-paraphenylene terephthalamide (Kevlar^{™}), carbon fibers, glass fibers, boron fibers, or ceramic fibers, and mixtures thereof, preferably carbon fibers, and the binder comprises a styrenic block copolymer.

In other preferred embodiments the preform comprises a bundle of fibers selected from natural fibers, synthetic fibers, such as aramide, polyester, polyamide, poly-paraphenylene terephthalamide (Kevlar^{™}), carbon fibers, glass fibers, boron fibers, or ceramic fibers, and mixtures thereof, preferably carbon fibers, and the binder preferably comprises a styrene-diene-styrene copolymer.

In some other preferred embodiments the preform comprises a bundle of fibers selected from natural fibers, synthetic fibers, such as aramide, polyester, polyamide, poly-paraphenylene terephthalamide (Kevlar^{™}), carbon fibers, glass fibers, boron fibers, or ceramic fibers, and mixtures thereof, preferably carbon fibers, and the binder more preferably comprises a styrene-butadiene-styrene (SBS) copolymer.

In other embodiments the preform comprises a bundle of fibers selected from natural fibers, synthetic fibers, such as aramide, polyester, polyamide, poly-paraphenylene terephthalamide (Kevlar^{™}), carbon fibers, glass fibers, boron fibers, or ceramic fibers, and mixtures thereof, preferably carbon fibers, and the binder comprises a polyurethane or a copolyester thermoplastic polymer.

In some embodiments the preform has a permeability of from 10⁻⁸ from 10⁻⁴ m² in-plane. measured by means of a linear injection procedure at constant pressure. In some other embodiments the permeability is 10⁻⁷ from 10⁻⁵ m² in-plane, for example 10⁻⁶ m² in-plane. More particularly the permeability is determined by a permeability analysis procedure carried out with a metal mold between 500 - 1500 mm long and 150 - 350 mm wide with a glass cover and closes on a rubber gasket. The injection pressure of the resin can vary between 0.1 and 10 bar (0,01 and 1 MPa). The filling temperature is adjusted according to the resin to obtain a viscosity of between 5 and 15,000 mPa.s as measured according to ISO 12085. The filling speed is quantified visually. The permeability of the preform can be modified by acting on the % of porosity for the printed preform.

Preform are typically obtained by the successive deposition of layers of the continuous filament having a pororosity of between 20 and 75%, for example 30 and 60%, or 35-55%.

In another aspect the invention relates to the use of the preform of the invention in the manufacturing of a reinforced composite final part.

In still another aspect the invention relates to a method for manufacturing a reinforced composite final part starting from the preform of the invention. This method thus comprises: (i) obtaining a preform according to the method as defined above; and further (ii) impregnating the resulting preform of the invention with a thermoplastic or thermoset resin.

A schematic representation of the method is shown in Figure 4, for better understanding of the manufacturing process according to the invention where the continuous filament (4) is deposited (deposited filament (10)) in successive layers to obtain a preform (11), and after the impregnation of said preform with an impregnation resin (12) a reinforced composite final part (13) is obtained. The impregnation step completes the preform with the impregnation resin eliminating the initial porosity.

The thermoplastic or thermoset resins to be used in the impregnation step, also referred to herein as the impregnation thermoplastic or thermoset resins, are well known in this field. Impregnation can be carried out by liquid molding processes, in particular by a resin transfer molding process or by infusion. Thermoplastic resins for impregnation can be for example, nylons, such as polyamide 6 (nylon 6), thermoplastic elastomers (TPE), such as styrenic block copolymers, thermoplastic polyurethanes (TPU) or thermoplastic copolyesters (TPC). In some embodiments the thermoplastic resin for impregnation is a nylon, preferably a polyamide 6 (nylon 6). In some other embodiment the thermoplastic resin is a thermoplastic elastomer, in particular selected from the group of styrenic block copolymers. In still other embodiments the thermoplastic resin is a TPU or a TPC.

Non-limiting examples of suitable thermoset resins are epoxy resins, polyesters, vinyl esters, phenolic resins, among others. In some embodiments the resin is a thermoset resin, preferably an epoxy resin.

In some other embodiment the thermoset resin is a polyester. In still other embodiments the thermoset resin is a vinyl ester or a phenolic resin.

The method for manufacturing the part comprises further a first curing step. This first curing step is typically carried out at a temperature of from 10 to 165°C, or from 25 to 150° C, or from 50 to 100°C, depending on the selected resin, or the part size, among other factors. Times necessary for curing are also variable, but typically comprised between 0.5 to 4 hours, for example from 1 to 3 hours.

The method may also comprise a further second curing step (or post-curing step). Post-curing is typically carried out at a temperature of from 40 to 180°C, or from 50 to 175 °C, or from 60 to 150°C, depending on the conditions of the first curing step, the selected resin, or the part size, among other factors. Times necessary for post-curing are also variable, but are typically comprised between 2 to 16 hours, for example between 5 to 12 hours, or from 7 to 10 hours.

In another aspect the invention relates to a reinforced composite part obtainable by the above disclosed method for manufacturing a reinforced composite part. The method for manufacturing the reinforced composite part of the present invention avoids the porosity in the obtained part that arises in other additive processes of the state of the art, allowing the part to present very good mechanical properties in the same order of magnitude as those achieved by current processes of preforming and molding of composite.

In some preferred embodiments the part comprises a bundle of fibers selected from natural fibers, synthetic fibers, such as aramide, polyester, polyamide, poly-paraphenylene terephthalamide (Kevlar^{™}), carbon fibers, glass fibers, boron fibers, or ceramic fibers, and mixtures thereof, preferably carbon fibers, the binder comprises a styrenic block copolymer and the impregnation resin comprises an epoxy resin.

In other preferred embodiments the part comprises a bundle of fibers selected from natural fibers, synthetic fibers, such as aramide, polyester, polyamide, poly-paraphenylene terephthalamide (Kevlar^{™}), carbon fibers, glass fibers, boron fibers, or ceramic fibers, and mixtures thereof, preferably carbon fibers, the binder comprises a styrene-diene-styrene copolymer, preferably a styrene-butadiene-styrene (SBS) copolymer, and the impregnation resin comprises an epoxy resin.

In some preferred embodiments the part comprises a bundle of fibers selected from natural fibers, synthetic fibers, such as aramide, polyester, polyamide, poly-paraphenylene terephthalamide (Kevlar^{™}), carbon fibers, glass fibers, boron fibers, or ceramic fibers, and mixtures thereof, preferably carbon fibers, the binder comprises a styrenic block copolymer and the impregnation resin comprises a polyamide 6.

In other preferred embodiments the part comprises a bundle of fibers selected from natural fibers, synthetic fibers, such as aramide, polyester, polyamide, poly-paraphenylene terephthalamide (Kevlar^{™}), carbon fibers, glass fibers, boron fibers, or ceramic fibers, and mixtures thereof, preferably carbon fibers, the binder comprises a styrene-diene-styrene copolymer, preferably a styrene-butadiene-styrene (SBS) copolymer and the impregnation resin comprises a polyamide 6.

In a preferred embodiment the part comprises a bundle of carbon fibers, the binder comprises a styrene-butadiene-styrene copolymer and epoxy resin as the impregnation resin.

In still a further aspect the invention relates to the use of the reinforced composite parts above disclosed in the structural reinforcement of elements such as planes, engine intake manifolds, automotive pedals, supports frames, hollow parts, ribbed parts, or windows.

### Definitions:

TEX: A unit for expressing linear density, equal to the weight in grams of one kilometer of yarn, filament, fiber, or other textile strand.

The "K" of a bundle of fibers corresponds to the amount of fibers grouped together in thousands.

Examples provided below and the figures are intended to be only illustrative and are not construed to limit the present invention in any way.

### EXAMPLES

### Example 1:

### 1.1 Filament manufacture

A continuous filament was prepared using comprising one inner core made from a bundle of fibers consisting of a carbon roving (Toho-Tenax HTS40 F13 24K 1600 Tex) and an outer binder coating, completely wrapping around said one inner core, wherein the binder consisted of a thermoplastic polymer: elastomer SBS (styrene-butadiene-styrene) of high fluency (between 2.5-7 g/10 min -190 °C/5 Kg according to ASTM 1238) and having a high content of styrene (between 38-50% molecular weight with respect to the total molecular weight of the copolymer).

The continuous filament was obtained by a thread coating process, wherein the extrusion temperature of SBS was between 185-210°C

The resulting continuous filament showed a diameter of 1.75 mm; and the amount in wt.% of the SBS coating with respect to the total weight of the filament was between 8-15 wt.%.

### 1.2 Preform manufacture

The continuous filament obtained in Example 1 was fed into an additive equipment FDM with an extruder head incorporating a cutting system of fibers by means of a blade. Said system is controlled by a software that allows to define the porosity of the preform by adjusting the overlap between layers. A preform was obtained by the successive deposition of five layers of the continuous filament having a pororosity of 35-55%.

### 1.3 Reinforced composite part manufacture

To produce the composite, the preform obtained in 1.2 was introduced into an infusion mold and was subsequently infused by an epoxy system following a Resin Transfer Moulding (RTM) process.

As the epoxy system, an epoxy system of high fluidity (205 mPa according to ISO 12058-2 at 23°C) specific for infusion processes was used [epoxy resin: Resoltech 1050 and catalytic system 1053S (hardener)]. The mixing ratio by weight was 100 (epoxy): 35 (hardener).

After the infusion process, the composite was cured at room temperature for 2.5 hours and post-cured for 4 hours at 60 °C.

The obtained reinforced composite part contained 5 wt.% of SBS in respect of the total weight of the part. The part presented the following properties, according to ISO 527-4 (test samples: 250x25x3 mm, rate: 2 mm/minute), ISO 178 and ISO 868:
- Tensile strength: 1019 MPa
- Tensile modulus: 68 GPa
- Bending tension: 868 MPa
- Flexural modulus: 56252 MPa
- Impact resistance: 191 KJ/m2 (at 23°C and 50% h.r)
- Hardness Shore D: 70

With regards to conventional solutions, wherein a final composite part is obtained starting from a preform obtained in a conventional way by stacking fabrics, the reinforced composite final part obtained according to the present invention provides an improvement of 42.5% in impact resistance without loss of tensile strength and with a decrease of flexural modulus of 12.7%. This shows that the SBS binder coating improves the mechanical properties of the final part.

## Claims

1. A method for additive manufacturing by Fused Deposition Modeling of a preform, the method comprising:
a) supplying a continuous filament (4) that comprises:
(i) one inner core (5) consisting of a bundle of fibers (6) and
(ii) an outer thermoplastic polymer binder coating (7), which completely wraps said inner core;
wherein said continuous filament is obtained by concentric extrusion of the thermoplastic polymer binder onto the one inner core
b) feeding the continuous filament to an extruder at a feed rate, the extruder heating the continuous filament to a temperature which is between the softening temperature of the binder and the melting temperature of the binder, and below the melting temperature of the fibers; and
c) 3D deposition of the continuous filament on a base surface in at least one or more successive layers to obtain the preform.

2. The method according to claim 1, wherein the bundle of fibers comprises one or more fibers.

3. The method according to any of claims 1 or 2, wherein the fibers are selected from the group of natural fibers, synthetic fibers, carbon, glass, boron, ceramic fibers and their mixtures, in particular carbon fibers.

4. The method according to any of claims 1 to 3, wherein the binder comprises a thermoplastic polymer, preferably selected from the group consisting of styrenic block copolymers, polyurethanes, copolyesters and mixtures thereof.

5. The method according to claim 4, wherein the thermoplastic polymer is selected from the group of the styrene-diene-styrene copolymers, preferably styrene-butadiene-styrene copolymers.

6. The method according to any of claims 1 to 5, wherein the diameter of the filament is from 0.5 to 20 mm, in particular from 1.5 to 10 mm, more particularly 2 to 5 mm.

7. A method for manufacturing a reinforced composite part comprising: obtaining a preform according to the method defined in any one of claims 1 to 6; and impregnating the resulting preform with a thermoplastic or thermoset resin.

8. The method according to claim 7, comprising a first curing step and optionally comprising a post-curing step.

9. The method according to any of claims 7 to 8, wherein impregnating the preform is done by a liquid molding process, in particular by a resin transfer molding process or by infusion.

10. The method according to claim 9, wherein the resin used in for the impregnation is thermoset resin, preferably an epoxy resin, or a thermoplastic resin, preferably a polyamide 6 resin.

## Patentansprüche

1. Verfahren zur additiven Herstellung eines Vorformlings durch Fused Deposition Modeling, umfassend:
a) Bereitstellen eines Endlosfilaments (4), das folgendes umfasst:
(i) einen inneren Kern (5), der aus einem Bündel von Fasern (6) besteht, und
(ii) eine äußere thermoplastische Polymerbindemittel-Beschichtung (7), die den inneren Kern vollständig umhüllt;
wobei das Endlosfilament durch konzentrische Extrusion des thermoplastischen Polymerbindemittels auf den einen inneren Kern erhalten wird,
b) Zuführen des Endlosfilaments zu einem Extruder mit einer Zuführgeschwindigkeit, wobei der Extruder das Endlosfilament auf eine Temperatur erhitzt, die zwischen der Erweichungstemperatur des Bindemittels und der Schmelztemperatur des Bindemittels und unterhalb der Schmelztemperatur der Fasern liegt; und
c) 3D-Abscheiden des Endlosfilaments auf einer Grundfläche in mindestens einer oder mehreren aufeinanderfolgenden Schichten, um den Vorformling zu erhalten.

2. Verfahren nach Anspruch 1, wobei das Bündel von Fasern eine oder mehrere Fasern umfasst.

3. Verfahren nach einem der Ansprüche 1 oder 2, wobei die Fasern aus der Gruppe von Naturfasern, synthetischen Fasern, Carbon-, Glas-, Bor- und Keramikfasern sowie deren Mischungen ausgewählt sind, insbesondere Carbonfasern sind.

4. Verfahren nach einem der Ansprüche 1 bis 3, wobei das Bindemittel ein thermoplastisches Polymer umfasst, vorzugsweise ausgewählt aus der Gruppe bestehend aus Styrol-Blockcopolymeren, Polyurethanen, Copolyestern und Mischungen daraus.

5. Verfahren nach Anspruch 4, wobei das thermoplastische Polymer ausgewählt ist aus der Gruppe der Styrol-Dien-Styrol-Copolymere, vorzugsweise Styrol-Butadien-Styrol-Copolymere.

6. Verfahren nach einem der Ansprüche 1 bis 5, wobei der Durchmesser des Filaments 0,5 bis 20 mm, insbesondere 1,5 bis 10 mm, insbesondere 2 bis 5 mm, beträgt.

7. Verfahren zur Herstellung eines verstärkten Verbundwerkstoffteils, bei dem man einen Vorformling gemäß dem Verfahren nach einem der Ansprüche 1 bis 6 herstellt und den erhaltenen Vorformling mit einem thermoplastischen oder duroplastischen Harz imprägniert.

8. Verfahren nach Anspruch 7, umfassend einen ersten Aushärtungsschritt und gegebenenfalls einen Nachhärtungsschritt.

9. Verfahren nach einem der Ansprüche 7 bis 8, wobei das Imprägnieren des Vorformlings durch ein Flüssigformverfahren, insbesondere durch ein Resin-Transfer-Molding-Verfahren oder durch Infusion erfolgt.

10. Verfahren nach Anspruch 9, wobei das für die Imprägnierung verwendete Harz ein duroplastisches Harz, vorzugsweise ein Epoxidharz, oder ein thermoplastisches Harz, vorzugsweise ein Polyamid 6-Harz, ist.

## Revendications

1. Procédé de fabrication additive d'une préforme par dépôt de filament fondu comprenant les étapes consistant à :
a) fournir un filament continu (4) qui comprend :
(i) un noyau interne (5) constitué d'un faisceau de fibres (6) et
(ii) un revêtement extérieur de liant polymère thermoplastique (7) qui enveloppe complètement ledit noyau intérieur ;
ledit filament continu étant obtenu par extrusion concentrique du liant polymère thermoplastique sur le noyau intérieur
b) acheminer le filament continu dans une extrudeuse à une vitesse d'alimentation, l'extrudeuse chauffant le filament continu à une température comprise entre la température de ramollissement du liant et la température de fusion du liant, et inférieure à la température de fusion des fibres ; et
c) déposer de façon tridimensionnelle le filament continu sur une surface de base en au moins une ou plusieurs couches successives pour obtenir la préforme.

2. Procédé selon la revendication 1, dans lequel le faisceau de fibres comprend une ou plusieurs fibres.

3. Procédé selon l'une quelconque des revendications 1 ou 2, dans lequel les fibres sont choisies dans le groupe des fibres naturelles, des fibres synthétiques, des fibres de carbone, de verre, de bore, de céramique et de leurs mélanges, en particulier des fibres de carbone.

4. Procédé selon l'une quelconque des revendications 1 à 3, dans lequel le liant comprend un polymère thermoplastique, de préférence choisi dans le groupe constitué par les copolymères à blocs styréniques, les polyuréthanes, les copolyesters et leurs mélanges.

5. Procédé selon la revendication 4, dans lequel le polymère thermoplastique est choisi dans le groupe des copolymères styrène-diène-styrène, de préférence des copolymères styrène-butadiène-styrène.

6. Procédé selon l'une quelconque des revendications 1 à 5, dans lequel le diamètre du filament est compris entre 0,5 et 20 mm, en particulier entre 1,5 et 10 mm, plus particulièrement entre 2 et 5 mm.

7. Procédé de fabrication d'une pièce composite renforcée comprenant les étapes consistant : à obtenir une préforme selon le procédé défini dans l'une quelconque des revendications 1 à 6 ; et à imprégner la préforme obtenue avec une résine thermoplastique ou thermodurcissable.

8. Procédé selon la revendication 7, comprenant une première étape de polymérisation et comprenant éventuellement une étape de post-polymérisation.

9. Procédé selon l'une quelconque des revendications 7 à 8, dans lequel l'imprégnation de la préforme se fait par un procédé de moulage liquide, notamment par un procédé de moulage par transfert de résine ou par infusion.

10. Procédé selon la revendication 9, dans lequel la résine utilisée pour l'imprégnation est une résine thermodurcissable, de préférence une résine époxy, ou une résine thermoplastique, de préférence une résine polyamide 6.
